(19) Europäisches Patentamt
European Patent Office
Office européen des brevets

(11) Veröffentlichungsnummer: **0 438 766 A2**

# (12) EUROPÄISCHE PATENTANMELDUNG

(21) Anmeldenummer: **90125252.8**

(51) Int. Cl.5: **B32B 1/04**

(22) Anmeldetag: **21.12.90**

(30) Priorität: **25.01.90 DE 4002067**

(43) Veröffentlichungstag der Anmeldung: **31.07.91 Patentblatt 91/31**

(84) Benannte Vertragsstaaten: **AT CH DE ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Gross, Bernd**
**Friedenstrasse 4**
**W-6711 Grossniedesheim(DE)**
Erfinder: **Weber, Heinz, Dr.**
**Am Wehrhaus 26**
**W-6718 Gruenstadt(DE)**
Erfinder: **Schuon, Georg**
**Olympiastrasse 18**
**W-7958 Laupheim(DE)**

## (54) Laminate mit verbesserter Kantenstabilität.

(57) Die Erfindung betrifft Laminate mit verbesserter Kantenfestigkeit mit einer schaum- oder wabenförmigen Kernschicht A aus einem temperaturbeständigen Kunststoff und Deckschichten B aus faserverstärktem temperaturbeständigen Kunststoff, wobei mindestens eine Kante der Kernschicht mit einem schaumförmigen Streifen C, dessen Dichte höher ist als die Dichte des Kerns, aus einem temperaturbeständigen thermoplastischen Kunststoff verbunden ist.

EP 0 438 766 A2

# LAMINATE MIT VERBESSERTER KANTENSTABILITÄT

Die Erfindung betrifft Laminate aus einer schaum- oder wabenförmigen Kernschicht aus einem temperaturbeständigen Kunststoff und mindestens einer Deckschicht aus einem faserverstärkten temperaturbeständigen Kunststoff.

Sandwich-Verbundelemente oder Mehrschichtplatten aus einem Schaumkern und faserverstärkten Deckschichten sind bekannt, z.B. aus EP-A 313 171. Sie finden insbesondere als Bauelemente beim Innenausbau von Luftfahrzeugen Anwendung. Problematisch ist bei solchen Bauteilen die geringe Katentstabilität, die auch dann noch nicht ausreichen ist, wenn die Deckschicht um die Kanten des Schaumkerns herumgeführt wird.

Der Erfindung lag daher die Aufgabe zugrunde, die Kantenstabilität von Laminaten aus einem Schaumkern und faserverstärkten Deckschichten zu verbessern.

Die Lösung dieser Aufgabe besteht erfindungsgemäß darin, daß die Kanten der Kernschicht durch einen schaumförmigen Streifen aus einem temperaturbeständigen Kunststoff verstärkt werden.

Gegenstand der Erfindung sind demzufolge Laminate mit verbesserter Kantenstabilität aus

A. einer schaum- oder wabenförmigen Kernschicht mit einer Dichte von 30 bis 150 kg • $m^{-3}$ aus einem temperaturbeständigen thermoplastischen oder duroplastischen Kunststoff a,

B. mindestens einer Deckschicht aus einem faserverstärkten temperaturbeständigen thermoplastischen oder duroplastischen Kunststoff b,

bei denen mindestens eine Kante der Kernschicht mit einem schaumförmigen Streifen C mit einer Dichte von 200 bis 1000 kg • $m^{-3}$ aus einem temperaturbeständigen thermoplastischen Kunststoff c verbunden ist.

Die Abbildung zeigt eine Skizze des erfindungsgemäßen Laminats.

Die schaum- oder wabenförmige Kernschicht A weist eine Dichte von 30 bis 150, vorzugsweise von 40 bis 80 kg • $m^{-3}$, auf. Sie besteht aus einem temperaturbeständigen Kunststoff a. Bevorzugt sind schaumförmige Kernschichten aus thermoplastischen Kunststoffen, insbesondere Polyethersulfone

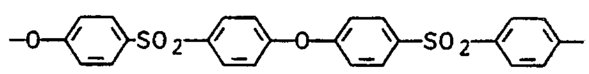 ,

Polysulfone

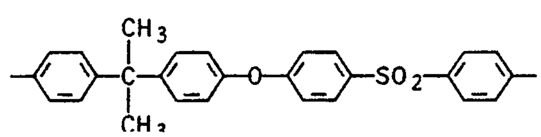 ,

Polyetherimide

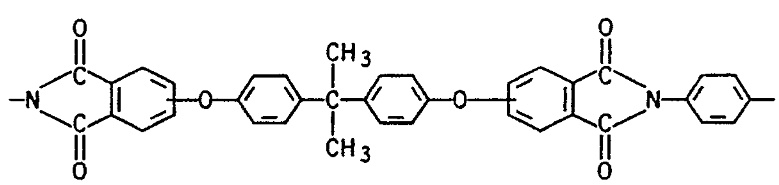

und Polyamide, wie z.B. Polyamid 6, Polyamid 6,6, Polyamid 4,6 und (teil)aromatische Polyamide.

Daneben sind auch thermoplastische Polyimide, Polyetherimide, Polycarbonat, Polyphenylensulfid und Polyphenylenether geeignet, sowie entsprechende Copolymere und Mischungen. Geeignete Duroplasten sind z.B. Epoxidharze, Phenol/Formaldehyd- und Melamin/Formaldehyd-Harze.

Die Kernschicht kann ferner wabenförmig sein und aus phenolharzgetränktem aromatischem Polyamid bestehen.

Die Kunststoffe sollen eine Wärmeformbeständigkeit nach DIN 53 461 (B) von mehr als 130 °C, vorzugsweise von mehr als 160 °C aufweisen.

Die Kernschicht hat vorzugsweise eine Dicke von 4 bis 40 mm, insbesondere von 5 bis 20 mm.

Die faserverstärkte Deckschicht B ist ungeschäumt. Als Kunststoffe kommen die selben Thermoplasten und Duroplasten b in Frage wie für die Kernschicht. Geeignete Fasern sind solche aus Glas, Kohlenstoff und aromatischem Polyamid. Die Fasern können als Gewebe, Gewirke, Matten oder als unidirektionale Gelege vorliegen. Bevorzugt sind Glasfasergewebe. Der Harzgehalt liegt im allgemeinen zwischen 20 und 60 Gew.-%.

Die Dicke der Deckschicht beträgt vorzugsweise 0,1 bis 1,5 mm, insbesondere 0,2 bis 0,6 mm.

Die Laminate aus Kern und Deckschichten(en) werden nach üblichen Verfahren hergestellt, z.B. durch Verpressen bei Temperaturen oberhalb des Erweichungspunktes des thermoplastischen bzw. bei der Aushärtungstemperatur des duroplastischen Kunststoffes der Deckschicht. In manchen Fällen können auch Klebefilme verwendet werden. Bei duroplastischen Kunststoffen ist dies meist notwendig, bei Thermoplasten sollten die Materialien der Klebefilme mit den Kunststoffen der Kern- bzw. Deckschicht verträglich sein, bevorzugt werden jeweils artgleiche Thermoplasten eingesetzt. Vorzugsweise sind beide Seiten der Kernschicht A mit einer Deckschicht B verbunden, in manchen Fällen kann eine Seite der Kernschicht auch frei sein oder mit einem anderen Material verbunden sein.

Erfindungsgemäß ist mindestens eine Kante der Kernschicht mit einem schaumförmigen Streifen C aus einem temperaturbeständigen thermoplastischen Kunststoff c verbunden. Die Dichte des Streifens ist verhältnismäßig hoch, damit eine ausreichende Härte und Steifigkeit gewährleistet ist.

Sie beträgt 200 bis 1000 kg $\cdot$ $m^{-3}$, vorzugsweise 300 bis 800 kg $\cdot$ $m^{-3}$. Der Querschnitt des Streifens kann beliebig geformt sein, z.B. die Form eines Halbkreises, eines Kreissegments oder eines Rechtecks mit gegebenenfalls abgerundeten oder abgeschrägten Ecken haben. Als temperaturbeständige Thermoplasten kommen wieder die oben genannten in Frage. Die Breite des Streifens C in der Laminatebene beträgt vorzugsweise 1 bis 20, insbesondere 5 bis 12 mm.

Das Verbinden des Schaumstreifens C mit der Kante der Kernschicht A kann grundsätzlich durch Verschweißen oder Verkleben erfolgen. Bei einem bevorzugten Verfahren geht man aber von einem ungeschäumten Strang oder Band aus treibmittelhaltigem Thermoplast c aus. Dieser Strang kann z.B. wie in der DE-A 39 25 740 beschrieben, durch Extrudieren von treibmittelhaltigem Granulat hergestellt werden. Als Treibmittel kommen bevorzugt niedrig siedende Flüssigkeiten in Frage, die den Thermoplasten nicht lösen, sondern höchstens quellen, vorzugsweise in Mengen von 1 bis 20, insbesondere von 2 bis 10 Gew.-%. Geeignete Treibmittel sind z.B. halogenierte Kohlenwasserstoffe, wie Dichlormethan und Chlorbenzol, Ketone, wie Aceton und Methylethylketon, Ether, Alkohole, Wasser und Gemische davon. Grundsätzlich können auch chemische Treibmittel, wie Azoverbindungen und Carbonate verwendet werden.

Der treibmittelhaltige Strang wird auf der Deckschicht an die Kante der Kernschicht angelegt und dieser Aufbau wird dann in eine Form eingelegt. Diese wird verschlossen und auf eine Temperatur oberhalb des Siedepunktes bzw. der Zersetzungstemperatur des Treibmittels erhitzt. Dabei schäumt der Strang auf und wird plastisch (infolge der Erniedrigung der Erweichungstemperatur des Thermoplasten c durch Treibmittelzusatz), so daß der sich bildende schaumförmige Streifen C durch Verkleben oder Verankern mit der Kante des Kerns A und gegebenenfalls der Deckschicht B verbinden kann. Es kann zweckmäßig sein, vor dem Einlegen des ungeschäumten Strangs in die Form, diesen ganz oder teilweise mit Folienmaterial der Deckschicht B zu umhüllen und gemeinsam zu erhitzen, so daß hinterher der Streifen C ebenfalls mit der Deckschicht B bedeckt ist. Eine andere Möglichkeit besteht darin, daß bei dem Ausgangslaminat die Deckschicht B über den Kern A herausragt und das überstehende Teil um den schaumfähigen Strang herumgelegt wird.

Bei dem Verpressen kann gleichzeitig das Laminat verformt werden, so daß es außer der ebenen Struktur auch gewölbt, gebogen oder gekrümmt sein kann und auch unterschiedlich dicke Bereiche aufweisen kann.

Die erfindungsgemäßen Laminate eignen sich als Bauteile beim Innenausbau von Luftfahrzeugen, insbesondere für Zwischenwände, Stauschränke oder Klappen für Hutablagen; ferner beim Automobil- und Schiffsbau sowie bei Haushaltsgeräten.

Die in den Beispielen genannten Teile und Prozente beziehen sich auf das Gewicht.

## Beispiel 1

In eine aus Grundplatte und abnehmbarem Rahmen bestehende, oben offene Form mit den lichten Maßen 300 x 300 x 10 mm wird eine 0,3 mm dicke, 300 x 300 mm messende Deckschicht aus einem mit 30 % Polyethersulfon getränktem Glasgewebe (Flächengewicht 296 g $\cdot$ $m^{-2}$ eingebracht. Darauf wird ein Polyethersulfon-Schaumstoff (Rohdichte 50 kg $\cdot$ $m^{-3}$, Abmessungen 295 x 295 x 11 mm) gelegt. An die Außenkanten des Kerns legt man einen Strang aus ungeschäumtem Polyethersulfon (Viskositätszahl 59 ml $\cdot$ $g^{-1}$) vom Querschnitt 10 x 2 mm an. Dieser Strang enthält 12 Gew.-% Methylethylketon als Treibmittel; er

ist über Monate lagerstabil.

Die mit einer Metallplatte abgedeckte Form wird in eine Plattenpresse gebracht. Die Grundplatte wird auf 240 ° C geheizt und bei dieser Temperatur etwa 5 sec lang gehalten. Nach dem Abkühlen wird entformt. Man erhält eine einseitig laminierte Platte, die von einem glatten, festen Rahmen aus Polyethersulfon-Schaum der Rohdichte von etwa 800 kg • $m^{-3}$ eingefaßt ist.

Beispiel 2

Auf die in Beispiel 1 beschriebene Form legt man ein mit 50 Gew.-% ungehärtetem Phenolharz getränktes Glasgewebe (296 g • $m^{-2}$) der Abmessungen 350 x 350 mm. Dieses Prepreg drückt man an den Boden und die inneren Seitenflächen der Form an. Anschließend wird eine 292 x 292 x 11 mm messende Platte aus Polyethersulfon-Schaum eingelegt. Um die Außenkanten des Schaumstoffs herum fügt man übereinander zwei treibmittelhaltige (12 % Methylethylketon) Polyethersulfon-Rundstränge mit Durchmesser 4 mm ein. Die überstehenden Ränder des Prepregs werden auf die Oberseite des Schaumstoff-Kerns umgeschlagen. Anschließend wird ein 290 x 290 mm messendes Phenolharz-Prepreg aufgelegt.

Die mit einer Metallplatte abgedeckte Form bringt man in eine Plattenpresse, heizt beidseitig auf 150 ° C auf und hält diese Temperatur 20 min lang. Nach dem Abkühlen wird entformt. Man erhält eine allseitig laminierte Platte. Infolge der hohen Rohdichte des Randbereichs (ca. 500 kg • $m^{-3}$) besitzt sie eine beachtliche Kantenfestigkeit.

Beispiel 3

Man verfährt wie in Beispiel 2, verwendet aber anstelle des Schaumkerns aus Polyethersulfon einen gleichgroßen aus Polyetherimid mit der Rohdichte 80 kg • $m^{-3}$. Zur Randverstärkung verwendet man Stränge aus treibmittelhaltigem (15 % eines Gemisches Dichlormethan/Tetrahydrofuran 7 : 3) Polyetherimid (Viskositätszahl 53 ml • $g^{-1}$).

Beispiel 4

Man verfährt wie in Beispiel 2, verwendet aber anstelle des Kerns aus Polyethersulfon eine 292 x 292 x 10 mm messende Wabe aus phenolharzgetränktem Polyamid (NOMEX-Papier) der Rohdichte 48 kg • $m^{-3}$. Zur Randverstärkung verwendet man wieder treibmittelhaltige Rundstränge aus Polyethersulfon.

**Patentansprüche**

**1.** Laminate mit verbesserter Kantenstabilität aus

A. einer schaum- oder wabenförmigen Kernschicht mit einer Dichte von 30 bis 150 kg • $m^{-3}$ aus einem temperaturbeständigen thermoplastischen oder duroplastischen Kunststoff a,

B. mindestens einer Deckschicht aus einem faserverstärkten temperaturbeständigen thermoplastischen oder duroplastischen Kunststoff b,

dadurch gekennzeichnet, daß mindestens eine Kante der Kernschicht mit einem schaumförmigen Streifen C mit einer Dichte von 200 bis 1000 kg • $m^{-3}$ aus einem temperaturbeständigen thermoplastischen Kunststoff c verbunden ist.

**2.** Laminate nach Anspruch 1, dadurch gekennzeichnet, daß die Kernschicht A 4 bis 40 mm dick ist, die Deckschicht B 0,1 bis 1,5 mm dick ist und der Streifen C 1 bis 20 mm breit ist.

**3.** Laminate nach Anspruch 1, dadurch gekennzeichnet, daß die Kunststoffe a, b und c eine Wärmeformbeständigkeit nach DIN 53 461 (B) von mindestens 130 ° C aufweisen.

**4.** Laminate nach Anspruch 1, dadurch gekennzeichnet, daß die Kernschicht schaumförmig ist und die Kunststoffe a und c jeweils artgleiche Thermoplasten sind.

**5.** Laminate nach Anspruch 4, dadurch gekennzeichnet, daß die Thermoplasten Polyethersulfone, Polysulfone, Polyetherimide oder Polyamide sind.

**6.** Laminate nach Anspruch 1, dadurch gekennzeichnet, daß die Kernschicht wabenförmig ist, und die Waben aus einem phenolharzgetränkiten aromatischen Polyamid bestehen.

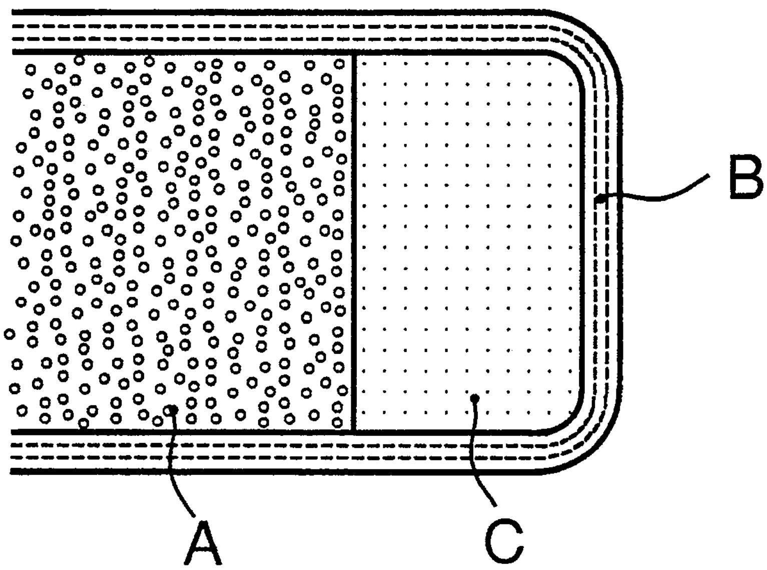
B
A
C